# EUROPEAN PATENT SPECIFICATION

(11) **EP 2 925 644 B1**
(45) Date of publication and mention of the grant of the patent: **07.03.2018**
(21) Application number: 13796158.7
(22) Date of filing: 26.11.2013
(51) Int. Cl.: B65G 19/08, B65G 19/24

(54) **CHAIN CONVEYOR DEVICE**
KETTENFÖRDERERVORRICHTUNG
DISPOSITIF CONVOYEUR À CHAÎNE

(30) Priority: 27.11.2012 GB 201221300
(43) Date of publication of application: 07.10.2015
(73) Proprietor: Schenck Process UK Limited, Edinburgh EH2 4JN (GB)
(72) Inventor: CHU, Harry, Hong Kong (CN); KENT, Dave, Lakeside Doncaster DN4 5RA (GB)
(74) Representative: HGF Limited
(86) International application number: PCT/GB2013/053126
(87) International publication number: WO 2014/083329

(56) References cited:
- DE-A1- 19 633 298
- US-A- 2 761 548
- US-A- 4 766 995
- US-A1- 2010 072 030
- US-B1- 6 662 932
- US-B2- 8 141 696

## Description

The present invention relates to an improved chain conveyor device and to a method of assembling a chain conveyor device. In particular, but not exclusively, the invention relates to chain conveyor devices with improved load distribution and a reduced volume of material.

A conveyor system is used as material handling equipment in many different industries. A common type of conveyor device is a chain conveyor which comprises an endless chain arrangement. Attached to the chain are a number of flights which push, pull or carry the load to be conveyed.

Known chain conveyors typically comprise a series of chain links, with adjacent chain links connected to each other by a connecting pin held in place by circlips, and a metal flight extending from each side of the chain link. A sleeve may be inserted over the metal flight. However, the profile of the sleeve is limited by the substantial size of the flight.

In many cases, the flights are attached by welding and are located separate and spaced from the connection of adjacent chain links. In other cases, the connection of adjacent chain links (the connecting pin and pin apertures of the chain links) are used to connect the flights. A flight is bolted to each side of the chain link using the pin aperture of the chain link and the connecting pin as the bolt.

The flights conveying the material carry much of the load of the system, although this loading is transmitted to the connecting pin as a tensile force. This loading can be complex as there can be frequent changes of direction, both horizontally and vertically. These changes of direction can cause flexing of the entire length of the flights. Fatigue is a common failure mode. The flights may also spring back suddenly to impact and damage nearby equipment or the conveyed material.

Each flight is a cantilever and the loading on the flight generates a moment which can produce a high separating force at the connection to the chain link. It is known that the welded connection represents a common source of failure. Consequently, the failed flight is unable to convey material and/or the sleeve can become separated from the flight.

For devices that use the connection of adjacent chain links to connect the flights, complex loading on the flight can be transmitted to the chain link as a force other than the tensile force. Therefore, the chain link, connecting pin, or the circlips that retain the pin, can fail. Failure at the connection results in catastrophic failure of the entire device.

US 6, 662, 932 relates to a chain and flights conveyor with swivel links. US 6, 662, 932 discloses a first flight member located on a first lateral side of a chain link and having a first reinforcing member extending into the body of said first flight member, the first reinforcing member further extending away from the first flight member, through the chain link and into or along the body of a second flight member located on a second opposite lateral side of the chain.

It is desirable to provide an improved conveyor device which at least mitigates one or more of the above problems. It is desirable to provide an improved conveyor device in which the flight or flights are not provided as cantilevers. It is desirable to provide an improved conveyor device which provides a material weight saving.

According to a first aspect of the present invention there is provided a chain conveyor device for material handling comprising:
an endless chain comprising a series of chain links,
   wherein adjacent chain links are connected to each other at a connection location; and
a first flight member located on a first lateral side of a chain link
   and having a first reinforcing member extending into or along the body of the first flight member,
the first reinforcing member further extending away from the first flight member, through the chain link
and into or along the body of a second flight member located on a second opposite lateral side of the chain link;and
the first reinforcing member passing through the chain link at a location spaced apart from the connection location; and
wherein the chain link has a connecting pin aperture at each end of the chain link (20) to allow connection to two adjacent chain links, and wherein the chain link (20) further includes a first reinforcing member aperture located between the two connecting pin apertures.

The diameters of the first reinforcing member and the first reinforcing member aperture may be substantially equal.

The first reinforcing member may extend into the first and second flight members a distance which is substantially less than the length of the first and second flight members. The first reinforcing member may extend into the first and second flight members a distance which is less than half the length of the first and second flight members.

The body of each of the first and second flight members may include a bore for receiving the first reinforcing member. Alternatively, the first and second flight members may include means for coupling the first reinforcing member to the first and second flight members along at least a portion of their length. The coupling means may comprise fastening means for fastening the first reinforcing member to an exterior surface of the first and second flight members.

The diameters of the first reinforcing member and the bore may be substantially equal.

The first and second flight members may be formed from a plastic or composite material or the like. The first and second flight members may be formed by moulding.

The cross sectional profile of the first and second flight members may include a thickened portion to accommodate the bore for the first reinforcing member. The profile may include one or more portions thinner than the bore diameter. The thickness of each flight member may taper down towards each lateral edge of the
flight member. Such a profile provides good load bearing while reducing weight and the amount of material used.

At least one of the first and second flight members may include a shield portion which extends from a major plane of the flight member towards a connection location. The shield portion may be adjacent to the chain link. The shield portion may include a recess for receiving and retaining the connecting pin that connects two adjacent chain links. Such an arrangement provides better retention of the connecting pin and avoids the requirement for circlips. Also, the body of the flight member is thicker at its base to resist bending moments.

The first reinforcing member may be formed from a rigid material such as steel, particularly forged steel. The first reinforcing member may be cylindrical.

The first flight member may include a second reinforcing member extending into the body of the first flight member and further extending away from the first flight member, through the chain link and into the body of the second flight member.

The chain link may further include a second reinforcing member aperture located between the two connecting pin apertures.

The first and second flight members may include a second bore for the second reinforcing member. The first and second flight members may include a second thickened portion to accommodate the second bore.

According to a second aspect of the present invention there is provided a method of assembling a chain conveyor device for material handling, the method comprising:
providing an endless chain comprising a series of chain links, wherein adjacent chain links are connected to each other at a connection location;
   inserting a first reinforcing member into a first flight member such that the first reinforcing member extends into the body of the first flight member and a first portion of the first reinforcing member aperture extends away from the first flight member;
passing the first portion of the first reinforcing member through the chain link so that the first flight member is located on a first lateral side of a chain link and such that a second portion extends away from a second opposite lateral side of the chain link;
inserting the second portion of the first reinforcing member into a second flight member such that the first reinforcing member extends into the body of the second flight member and such that the second flight member is located on a second opposite lateral side of the chain link; and
   passing the first reinforcing member through the chain link at a location spaced apart from the connection location;
   wherein the chain link has a connecting pin aperture at each end of the chain link to allow connection to two adjacent chain links, and wherein the chain link further includes a first reinforcing member aperture located between the two connecting pin apertures.

The method may include forming a bore at the first and second flight members and forming a first reinforcing member aperture at the chain link, both for receiving the first reinforcing member. The method may include forming the diameters of the first reinforcing member and the first reinforcing member aperture to be substantially equal.

The method may include forming the diameters of the first reinforcing member and the bore to be substantially equal.

The method may include retaining the first reinforcing member within one or both of the first reinforcing member aperture and the bore by an interference fit.

The method may include inserting the first reinforcing member into the first and second flight members by a distance which is less than half the length of the first and second flight members.

The method may include forming the first and second flight members from a plastic or composite material or the like. The first and second flight members may be formed by moulding.

The method may include forming at least one of the first and second flight members to include a shield portion which extends from a major plane of the flight member towards a connection location. The method may include forming the shield portion to include a recess for receiving and retaining the connecting pin that connects two adjacent chain links.

Embodiments of the present invention will now be described, by way of example only, with reference to the accompanying drawings in which:
Figure 1 is a perspective view of a chain conveyor device 10 for material handling;
Figure 2 is a perspective view of the housing of the chain conveyor device 10 and showing the movement of material;
Figure 3 is an exploded perspective view of a portion of a prior art chain and flights;
Figure 4 is an exploded perspective view of a portion of a chain and flights according to a first embodiment of the invention;
Figure 5 is an exploded perspective view of a portion of a chain and flights according to a second embodiment of the invention;
Figure 6 is a perspective view of an FEA model of the portion of chain and flights of the embodiment of Figure 5;
Figure 7 is a perspective view of the stress results from the FEA model of Figure 6 for the chain link and reinforcing members in isolation;
Figure 8 is a perspective view of the deflection results from the FEA model of

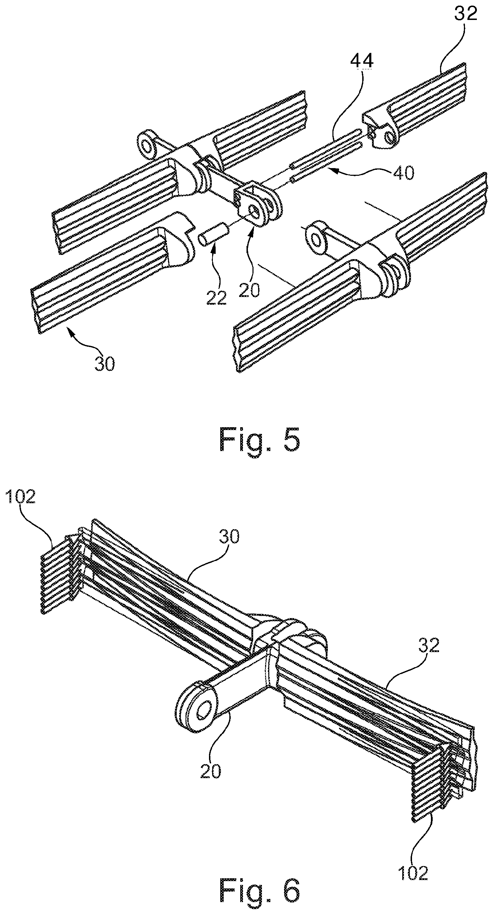

Figure 6 for the chain link and reinforcing members in isolation; and

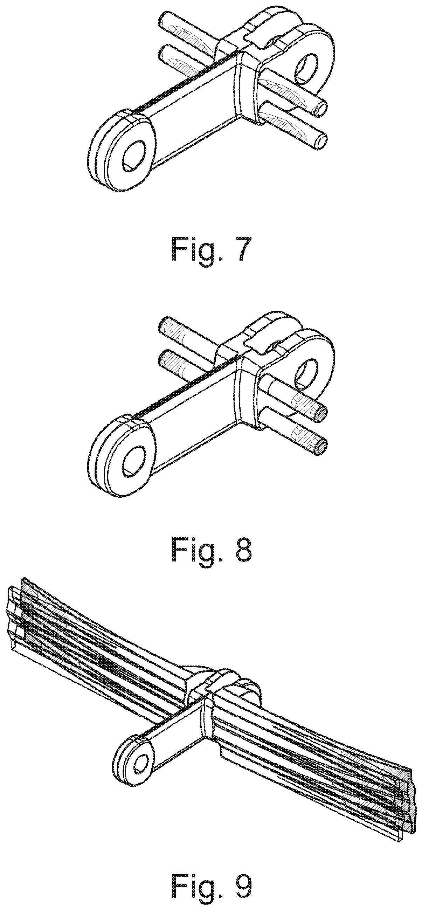

Figure 9 is a perspective view of the deflection results from the FEA model of
Figure 6 for the chain link, reinforcing members and flights.

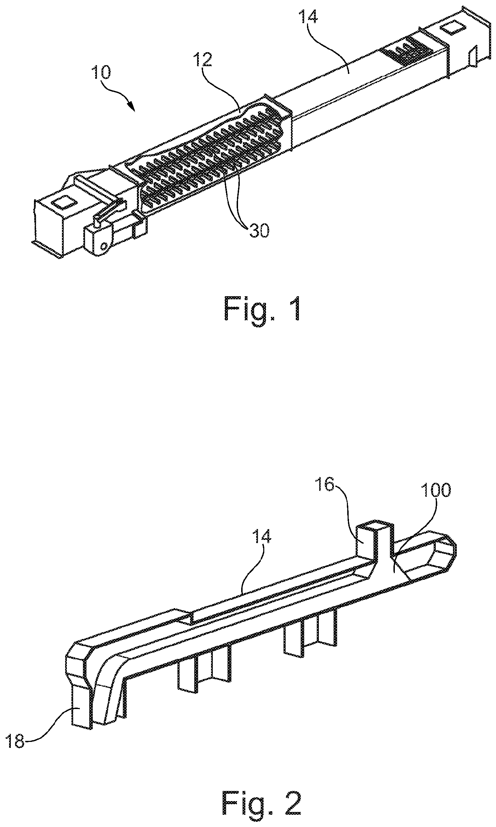

Figure 1 shows a chain conveyor device 10 for material handling. The device 10 comprises an endless chain 12 formed by a series of connected chain links 20 and an arrangement of flights 30 connected to the chain links 20 for moving the material 100. The chain 12 and connected flights 30 are provided within a housing 14. The housing 14 includes an inlet 16 for receiving material 100 at a first location and an outlet 18 for discharging the material 100 at a second location. This movement of material 100 is shown in Figure 2.

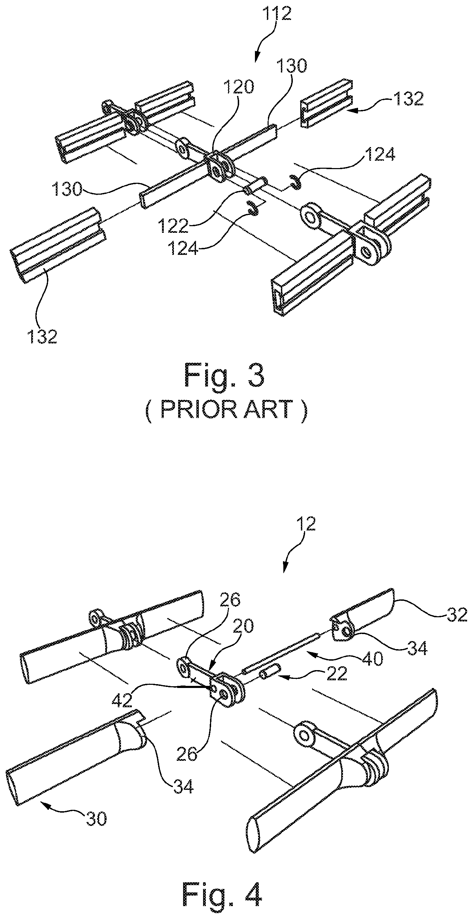

Figure 3 shows a portion of a prior art chain 112 with connected flights 130. The chain 112 comprise a series of chain links 120, with adjacent chain links connected to each other by a connecting pin 122 held in place by circlips 124. A metal flight 130 is welded to each side of the chain link 120. A sleeve 132 is inserted over the metal flight.

Figure 4 shows a portion of a chain 12 and flights 30,32 according to a first embodiment of the invention. As with the known arrangement, the chain 12 comprise a series of chain links 20, and adjacent chain links are connected to each other by a connecting pin 22. A first flight 30 is positioned at a first side of the chain link 20 and a second flight 32 is positioned at a second side of the chain link 20.

However, rather than using welding (or the connection point 26 for adjacent chain links) a first reinforcing member 40 extends into the body of the first flight 30. The first reinforcing member 40 further extends away from the first flight 30, through the chain link 20 and into the body of the second flight 32. The first reinforcing member 40 is formed from a strong, stiff and tough material, for example forged steel. However, other forms of steel, including extruded steel, stainless steel, high tensile rolled steel, coiled spring steel, and non-steel materials could also be used.

Therefore, rather than being a cantilever like the prior art flights, the first reinforcing member 40 will experience only bending stresses in operation.

The first reinforcing member 40 passes through a separate aperture 42 provided at the chain link 20. This aperture 42 is at a location spaced apart from, and in between, the two connection locations 26 for adjacent chain links 20. Therefore, any loading on the flights 30 is not directly transmitted to the connecting pin 22. Also, the diameters of the first reinforcing member 40 and the aperture 42 are substantially equal so there is little or no clearance or play. This prevents or minimises any deviation of the first reinforcing member 40 from an axis normal to the plane of the aperture 42, and also assists in distributing loading.

Also, it can be seen that the arrangement according to the invention does not include any circlips 124. This is due to the profile of the flights 30 as explained below.

The flights 30 are plastic and formed by moulding. This allows greater flexibility in the cross sectional profile of the flights 30. In the embodiment of Figure 4, the thickness of each flight reduces towards each lateral edge of the flight 30. Such a profile provides good load bearing while reducing weight and the amount of material used.

A bore is formed in each flight 30 during moulding. The first reinforcing member 40 extends into a bore of the flights 30 for a distance which is around a third of the length of the flights. The diameters of the first reinforcing member 40 and the bores are substantially equal and the flights are connected to the first reinforcing member 40 using an interference fit.

During moulding, the flights are formed with a shield portion 34. This portion extends from a major plane of the flights 30 towards the connection location 26 and adjacent to the chain link 20. The shield portion 34 includes a recess for receiving and retaining the connecting pin 22. This arrangement provides better retention of the connecting pin 22 and avoids the requirement for circlips. Also, the body of the flight 30 is thicker at its base to resist bending moments.

Figure 5 shows a portion of a chain 12 and flights according to a second embodiment of the invention and like features are given like reference numerals. In this embodiment, there are two reinforcing members for increased strength and rigidity. The flights 30 are moulded with a second bore and the chain link 20 includes a second aperture for receiving the second reinforcing member 44. Also, in this embodiment, the flights have a modified profile. Each flight includes a thickened portion to accommodate each bore, as well as thinner portions. This geometry provides good bending strength while minimising on the amount of material used.

It has been found that the arrangement according to the invention provides excellent performance in terms of distribution of loading and stresses, greater rigidity and greater strength (withstanding a higher load before failure). This has been verified using Finite Element Analysis (FEA).

For instance, Figure 6 shows an FEA model of the portion of the chain 12 and flights of the embodiment of Figure 5. In the model, the applied load 102 represents the loading that the flights would experience when pushing the material 100. The flights experience bending and the bending deflection increases towards the free end of each flight.

This deflection is useful as it helps to accommodate changes of direction of the conveyor system and absorbs energy. A more rigid structure would experience greater stress at the chain link 20. This is why the first reinforcing member 40 only extends into the flights for about a third of the length of the flights. However, the plastic material can be selected with properties that do not result in rapid spring back when the load is removed.

Figure 7 shows the Von Mises stress results from the FEA model of Figure 6 for the chain link 20 and reinforcing members 40, 44 in isolation. It can be seen that the stress is evenly distributed with no local stress concentrations.

Figures 8 and 9 show the deflection results from the FEA model of Figure 6 for the chain link 20 and reinforcing members 40, 44 in isolation and with the flights respectively. The deflection progressively increases as the distance from the chain link 20 increases.

The invention provides a number of advantages. For example, as well as improved load distribution, the type and amount of materials used result in weight savings. Depending on the chain length involved (a typical range is from 10 m to 40 m), there is a significant 33% to 40% weight saving. As the chain weight is reduced, less power is required to convey both the chain and material. This improves the mechanical efficiency of the chain conveyor device.

The invention also provides material and manufacturing cost savings due, for example, to improved ease of manufacturing and a reduction in the number of parts.

Whilst specific embodiments of the present invention have been described above, it will be appreciated that departures from the described embodiments may still fall within the scope of the present invention, which is defined by the appended claims.

## Claims

1. A chain conveyor device (10) for material handling comprising:
an endless chain (12) comprising a series of chain links (20),
wherein adjacent chain links are connected to each other at a connection location (26); and
a first flight member (30) located on a first lateral side of a chain link (20) and having a first reinforcing member (40) extending into or along the body of the first flight member (30),
the first reinforcing member (40) further extending away from the first flight member (30), through the chain link (20)
and into or along the body of a second flight member (32) located on a second opposite lateral side of the chain link (20);and
the first reinforcing member (40) passing through the chain link (20) at a location spaced apart from the connection location (26); and
wherein the chain link (20) has a connecting pin aperture at each end of the chain link (20) to allow connection to two adjacent chain links, and wherein the chain link (20) further includes a first reinforcing member aperture (42) located between the two connecting pin apertures.

2. A device (10) as claimed in claim 1, wherein the diameters of the first reinforcing member (40) and the first reinforcing member aperture (42) are substantially equal; and optionally wherein the first reinforcing member (40) extends into or along the first and second flight members (30,32) a distance which is substantially less than the length of the first and second flight members (30, 32); and optionally wherein the first reinforcing member (40) extends into or along the first and second flight members (30, 32) a distance which is less than half the length of the first and second flight members (30, 32).

3. A device (10) as claimed in any preceding claim, wherein the body of each of the first and second flight members (30, 32) includes a bore for receiving the first reinforcing member (40); and optionally wherein the diameters of the first reinforcing member (40) and the bore are substantially equal.

4. A device (10) as claimed in any preceding claim, wherein the first and second flight members (30, 32) are formed from a plastic or composite material; and optionally wherein the first and second flight members (30, 32) are formed by moulding.

5. A device (10) as claimed in claim 3 or claim 4 when dependent on claim 3, wherein the cross sectional profile of the first and second flight members (30, 32) includes a thickened portion to accommodate the bore for the first reinforcing member (40).

6. A device (10) as claimed in claim 3 or any of claims 4 and 5 when dependent on claim 3, wherein the profile includes one or more portions thinner than the bore diameter.

7. A device (10) as claimed in any preceding claim, wherein the thickness of each flight member tapers down towards each lateral edge of the flight member.

8. A device (10) as claimed in any preceding claim, wherein at least one of the first and second flight members (30, 32) includes a shield portion (34) which extends from a major plane of the flight member towards a connection location; and optionally wherein the shield portion (34) is adjacent to the chain link (20); and optionally wherein the shield portion (34) includes a recess for receiving and retaining the connecting pin (22) that connects two adjacent chain links.

9. A device (10) as claimed in claim 1, wherein the first flight member (30) includes a second reinforcing member (44) extending into the body of the first flight member (30) and further extending away from the first flight member (30), through the chain link (20) and into the body of the second flight member (32); and optionally wherein the chain link (20) includes a second reinforcing member aperture located between the two connecting pin apertures; and optionally wherein the first and second flight members (30, 32) include a second bore for the second reinforcing member (44).

10. A method of assembling a chain conveyor device (10) for material handling, the method comprising:
providing an endless chain (12) comprising a series of chain links (20),
wherein adjacent chain links are connected to each other at a connection location (26);
inserting a first reinforcing member (40) into a first flight member (30) such that the first reinforcing member (40) extends into the body of the first flight member (30) and a first portion of the first reinforcing member aperture extends away from the first flight member (30);
passing the first portion of the first reinforcing member (40) through the chain link (20) so that the first flight member (30) is located on a first lateral side of a chain link (20) and such that a second portion extends away from a second opposite lateral side of the chain link (20);
inserting the second portion of the first reinforcing member (40) into a second flight member (32) such that the first reinforcing member (40) extends into the body of the second flight member (32) and such that the second flight member (32) is located on a second opposite lateral side of the chain link (20); and
passing the first reinforcing member (40) through the chain link (20) at a location spaced apart from the connection location (26);
wherein the chain link (20) has a connecting pin aperture at each end of the chain link (20) to allow connection to two adjacent chain links, and wherein the chain link (20) further includes a first reinforcing member aperture located between the two connecting pin apertures.

11. A method as claimed in claim 10, including forming a bore at the first and second flight members (30, 32) and forming a first reinforcing member aperture at the chain link (20), both for receiving the first reinforcing member (40); and optionally including forming the diameters of the first reinforcing member (40) and the first reinforcing member aperture (42) to be substantially equal.

12. A method as claimed in claim 11, including retaining the first reinforcing member (40) within one or both of the first reinforcing member aperture (42) and the bore by an interference fit; and optionally including inserting the first reinforcing member (40) into the first and second flight members (30, 32) by a distance which is less than half the length of the first and second flight members (30, 32).

13. A method as claimed in any of claims 10 to 12, including forming the first and second flight members (30, 32) from a plastic or composite material.

14. A method as claimed in any of claims 10 to 13, including forming at least one of the first and second flight members (30, 32) to include a shield portion (34) which extends from a major plane of the flight member towards a connection location and optionally including forming the shield portion (34) to include a recess for receiving and retaining a connecting pin (22) that connects two adjacent chain links.

## Patentansprüche

1. Kettenfördervorrichtung (10) für Materialhandling, umfassend:
an Endloskette (12) umfassend eine Reihe von Kettengliedern (20),
wobei benachbarte Kettenglieder miteinander an einer Verbindungsstelle (26) verbunden sind; und
sich ein erstes Flugelement (30) auf einer ersten lateralen Seite eines Kettenglieds (20) befindet und ein erstes Verstärkungselement (40) aufweist, das sich in den oder entlang des Körpers des ersten Flugelements (30) erstreckt,
wobei sich das erste Verstärkungselement (40) ferner weg von dem ersten Flugelement (30) erstreckt, durch das Kettenglied (20)
und in den oder entlang des Körpers eines zweiten Flugelements (32), das sich auf einer zweiten gegenüberliegenden lateralen Seite des Kettenglieds (20) befindet; und
das erste Verstärkungselement (40) durch das Kettenglied (20) an einer Stelle verläuft, die von der Verbindungsstelle (26) beabstandet ist; und
wobei das Kettenglied (20) eine Verbindungsstiftöffnung an jedem Ende des Kettenglieds (20) hat, um eine Verbindung mit zwei benachbarten Kettengliedern zu ermöglichen, und wobei das Kettenglied (20) ferner eine erste Verstärkungselementöffnung (42) enthält, die sich zwischen den zwei Verbindungsstiftöffnungen befindet.

2. Vorrichtung (10) nach Anspruch 1, wobei die Durchmesser des ersten Verstärkungselements (40) und der ersten Verstärkungselementöffnung (42) im Wesentlichen gleich sind; und optional wobei sich das erste Verstärkungselement (40) in das oder entlang des ersten und zweiten Flugelements (30, 32) um einen Abstand erstreckt, der im Wesentlichen weniger als die Länge des ersten und zweiten Flugelements (30, 32) ist; und optional wobei sich das erste Verstärkungselement (40) in das oder entlang des ersten und zweiten Flugelements (30, 32) um einen Abstand erstreckt, der weniger als die halbe Länge des ersten und zweiten Flugelements (30, 32) ist.

3. Vorrichtung (10) nach einem vorherigen Anspruch, wobei der Körper von jedem des ersten und zweiten Flugelements (30, 32) eine Bohrung zum Aufnehmen des ersten Verstärkungselements (40) enthält; und optional wobei die Durchmesser des ersten Verstärkungselements (40) und der Bohrung im Wesentlichen gleich sind.

4. Vorrichtung (10) nach einem vorherigen Anspruch, wobei das erste und zweite Flugelement (30, 32) aus einem Kunststoff- oder Verbundmaterial gebildet sind; und optional wobei das erste und zweite Flugelement (30, 32) durch Formen gebildet sind.

5. Vorrichtung (10) nach Anspruch 3 oder Anspruch 4, wenn abhängig von Anspruch 3, wobei das Querschnittsprofil des ersten und zweiten Flugelements (30, 32) einen verdickten Abschnitt enthält, um die Bohrung für das erste Verstärkungselement (40) unterzubringen.

6. Vorrichtung (10) nach Anspruch 3 oder einem der Ansprüche 4 und 5, wenn abhängig von Anspruch 3, wobei das Profil einen oder mehrere Abschnitte enthält, die dünner als der Bohrungsdurchmesser sind.

7. Vorrichtung (10) nach einem vorherigen Anspruch, wobei sich die Stärke von jedem Flugelement nach unten zu jedem Seitenrand des Flugelements verjüngt.

8. Vorrichtung (10) nach einem vorherigen Anspruch, wobei mindestens eines von dem ersten und zweiten Flugelement (30, 32) einen abgeschirmten Abschnitt (34) enthält, der sich von einer größeren Ebene des Flugelements zu einer Verbindungsstelle erstreckt; und optional wobei der abgeschirmte Abschnitt (34) benachbarte von dem Kettenglied (20) ist; und optional wobei der abgeschirmte Abschnitt (34) eine Aussparung zum Aufnehmen und Zurückhalten des Verbindungsstifts (22) enthält, der zwei benachbarte Kettenglieder verbindet.

9. Vorrichtung (10) nach Anspruch 1, wobei das erste Flugelement (30) ein zweites Verstärkungselement (44) enthält, das sich in den Körper des ersten Flugelements (30) erstreckt und sich ferner weg von dem ersten Flugelement (30) erstreckt, durch das Kettenglied (20) und in den Körper des zweiten Flugelements (32); und optional wobei das Kettenglied (20) eine zweite Verstärkungselementöffhung enthält, die sich zwischen den zwei Verbindungsstiftöffnungen befindet; und optional wobei das erste und zweite Flugelement (30, 32) eine zweite Bohrung für das zweite Verstärkungselement (44) enthält.

10. Verfahren zum Zusammenbauen einer Kettenfördervorrichtung (10) zum Materialhandling, das Verfahren umfassend:
Bereitstellen einer Endloskette (12) umfassend eine Reihe von Kettengliedern (20), wobei benachbarte Kettenglieder miteinander an einer Verbindungsstelle (26) verbunden sind;
Einsetzen eines ersten Verstärkungselements (40) in ein erstes Flugelement (30), sodass sich das erste Verstärkungselement (40) in den Körper des ersten Flugelements (30) erstreckt, und sich ein erster Abschnitt der ersten Verstärkungselementöffhung weg von dem ersten Flugelement (30) erstreckt;
Hindurchführen des ersten Abschnitts des ersten Verstärkungselements (40) durch das Kettenglied (20), sodass sich das erste Flugelement (30) auf einer ersten lateralen Seite eines Kettenglieds (20) befindet, und sodass sich ein zweiter Abschnitt weg von einer zweiten gegenüberliegenden lateralen Seite des Kettenglieds (20) erstreckt;
Einsetzen des zweiten Abschnitts des ersten Verstärkungselements (40) in ein zweites Flugelement (32), sodass sich das erste Verstärkungselement (40) in den Körper des zweiten Flugelements (32) erstreckt, und sodass sich das zweite Flugelement (32) auf einer zweiten gegenüberliegenden lateralen Seite des Kettenglieds (20) befindet; und
Hindurchführen des ersten Verstärkungselements (40) durch das Kettenglied (20) an einer Stelle, die von der Verbindungsstelle (26) beabstandet ist;
wobei das Kettenglied (20) eine Verbindungsstiftöffnung an jedem Ende des Kettenglieds (20) hat, um eine Verbindung mit zwei benachbarten Kettengliedern zu ermöglichen, und wobei das Kettenglied (20) ferner eine erste Verstärkungselementöffnung enthält, die sich zwischen den zwei Verbindungsstiftöffnungen befindet.

11. Verfahren nach Anspruch 10, das ein Bilden einer Bohrung an dem ersten und zweiten Flugelement (30, 32) und Bilden einer ersten Verstärkungselementöffnung an dem Kettenglied (20) enthält, die beide zum Aufnehmen des ersten Verstärkungselements (40) sind; und optional enthaltend ein Bilden der Durchmesser des ersten Verstärkungselements (40) und der ersten Verstärkungselementöffhung (42), um im Wesentlichen gleich zu sein.

12. Verfahren nach Anspruch 11, das ein Zurückhalten des ersten Verstärkungselements (40) in einer oder beiden der ersten Verstärkungselementöffhung (42) und der Bohrung durch einen Passsitz; und optional enthaltend ein Einsetzen des ersten Verstärkungselements (40) in das erste und zweite Flugelement (30, 32) um einen Abstand, der weniger als die halbe Länge des ersten und zweiten Flugelements (30, 32) ist.

13. Verfahren nach einem der Ansprüche 10 bis 12, das ein Bilden des ersten und zweiten Flugelements (30, 32) aus einem Kunststoff- oder Verbundmaterial enthält.

14. Verfahren nach einem der Ansprüche 10 bis 13, das ein Bilden von mindestens einem von dem ersten und zweiten Flugelement (30, 32) enthält, um einen abgeschirmten Abschnitt (34) zu enthalten, der sich von einer größeren Fläche des Flugelements zu einer Verbindungsstelle erstreckt, und optional enthaltend ein Bilden des abgeschirmten Abschnitts (34), um eine Aussparung zum Aufnehmen und Zurückhalten eines Verbindungsstifts (22) zu enthalten, der zwei benachbarte Kettenglieder verbindet.

## Revendications

1. Dispositif de convoyeur à chaîne (10) destiné à la manutention de matériaux comprenant :
une chaîne sans fin (12) comprenant une série de maillons de chaîne (20),
lesdits maillons de chaîne adjacents étant reliés entre eux en un emplacement de liaison (26) ; et
un premier élément raclette (30) situé sur un premier côté latéral d'un maillon de chaîne (20) et possédant un premier élément de renfort (40) s'étendant jusque dans le corps du premier élément raclette (30) ou le long de celui-ci,
le premier élément de renfort (40) s'éloignant en outre du premier élément raclette (30) à travers le maillon de chaîne (20)
et jusque dans le corps d'un second élément raclette (32) ou le long du corps d'un second élément raclette situé sur un second côté latéral opposé du maillon de chaîne (20) ; et
le premier élément de renfort (40) passant à travers le maillon de chaîne (20) au niveau d'un emplacement espacé de l'emplacement de liaison (26) ; et
ledit maillon de chaîne (20) possédant une ouverture d'axe de liaison à chaque extrémité du maillon de chaîne (20) pour permettre une liaison à deux maillons de chaîne adjacents et ledit maillon de chaîne (20) comprenant en outre une première ouverture d'élément de renfort (42) située entre les deux ouvertures d'axe de liaison.

2. Dispositif (10) selon la revendication 1, lesdits diamètres du premier élément de renfort (40) et de ladite première ouverture d'élément de renfort (42) étant sensiblement égaux ; et éventuellement ledit premier élément de renfort (40) s'étendant jusque dans les premier et second éléments raclettes (30, 32) ou le long de ceux-ci d'une distance qui est sensiblement inférieure à la longueur des premier et second éléments raclettes (30, 32) ; et éventuellement ledit premier élément de renfort (40) s'étendant jusque dans les premier et second éléments raclettes (30, 32) ou le long de ceux-ci d'une distance qui est inférieure à la moitié de la longueur des premier et second éléments raclettes (30, 32).

3. Dispositif (10) selon l'une quelconque des revendications précédentes, ledit corps de chacun des premier et second éléments raclettes (30, 32) comprenant un alésage destiné à recevoir le premier élément de renfort (40) ; et éventuellement lesdits diamètres du premier élément de renfort (40) et de l'alésage étant sensiblement égaux.

4. Dispositif (10) selon l'une quelconque des revendications précédentes, lesdits premier et second éléments raclettes (30, 32) étant formés à partir d'un matériau plastique ou composite ; et éventuellement lesdits premier et second éléments raclettes (30, 32) étant formés par moulage.

5. Dispositif (10) selon la revendication 3 ou 4 lorsqu'elles dépendent de la revendication 3, ledit profil de section transversale des premier et second éléments raclettes (30, 32) comprenant une partie épaissie pour accueillir l'alésage destiné au premier élément de renfort (40).

6. Dispositif (10) selon la revendication 3 ou l'une quelconque des revendications 4 et 5 lorsqu'elles dépendent de la revendication 3, ledit profil comprenant une ou plusieurs parties plus minces que le diamètre d'alésage.

7. Dispositif (10) selon l'une quelconque des revendications précédentes, ladite épaisseur de chaque élément raclette s'effilant vers le bas vers chaque bord latéral de l'élément raclette.

8. Dispositif (10) selon l'une quelconque des revendications précédentes, au moins l'un des premier et second éléments raclettes (30, 32) comprenant une partie cache (34) s'étendant à partir du plan majeur de l'élément raclette vers un emplacement de liaison ; et éventuellement ladite partie cache (34) étant adjacente au maillon de chaîne (20) ; et éventuellement ladite partie cache (34) comprenant un évidement destiné à recevoir et à retenir l'axe de liaison (22) qui relie deux maillons de chaîne adjacents.

9. Dispositif (10) selon la revendication 1, ledit premier élément raclette (30) comprenant un second élément de renfort (44) s'étendant jusque dans le corps du premier élément raclette (30) et s'éloignant en outre du premier élément raclette (30), à travers le maillon de chaîne (20) et jusque dans le corps du second élément raclette (32) ; et éventuellement ledit maillon de chaîne (20) comprenant une seconde ouverture d'élément de renfort située entre les deux ouvertures d'axe de liaison ; et éventuellement lesdits premier et second éléments raclettes (30, 32) comprenant un second alésage destiné au second élément de renfort (44).

10. Procédé d'assemblage d'un dispositif de convoyeur à chaîne (10) destiné à la manutention de matériaux, ledit procédé comprenant :
l'obtention d'une chaîne sans fin (12) comprenant une série de maillons de chaîne (20), lesdits maillons de chaîne adjacents étant reliés entre eux en un emplacement de liaison (26) ;
l'insertion d'un premier élément de renfort (40) dans un premier élément raclette (30) de sorte que le premier élément de renfort (40) s'étende jusque dans le corps du premier élément raclette (30) et une première partie de la première ouverture d'élément de renfort s'éloignant du premier élément raclette (30) ;
le passage de la première partie du premier élément de renfort (40) à travers le maillon de chaîne (20) afin que le premier élément raclette (30) soit situé sur un premier côté latéral d'un maillon de chaîne (20) et de sorte qu'une seconde partie s'éloigne d'un second côté latéral opposé du maillon de chaîne (20) ;
l'insertion d'un seconde partie du premier élément de renfort (40) jusque dans le second élément raclette (32) de sorte que le premier élément de renfort (40) s'étende jusque dans le corps du second élément raclette (32) et de sorte que le second élément raclette (32) soit situé sur un second côté latéral opposé du maillon de chaîne (20) ; et
le passage du premier élément de renfort (40) à travers le maillon de chaîne (20) au niveau d'un emplacement espacé de l'emplacement de liaison (26) ;
ledit maillon de chaîne (20) possédant une ouverture d'axe de liaison à chaque extrémité du maillon de chaîne (20) pour permettre une liaison aux deux maillons de chaîne adjacents, et ledit maillon de chaîne (20) comprenant en outre une première ouverture d'élément de renfort située entre les deux ouvertures d'axe de liaison.

11. Procédé selon la revendication 10 comprenant la formation d'un alésage au niveau des premier et second éléments raclettes (30, 32) et la formation d'une première ouverture d'élément de renfort au niveau du maillon de chaîne (20), étant tous deux destinés à recevoir le premier élément de renfort (40) ; et éventuellement comprenant la formation des diamètres du premier élément de renfort (40) et de la première ouverture d'élément de renfort (42) de sorte qu'il soient sensiblement égaux.

12. Procédé selon la revendication 11, comprenant la rétention du premier élément de renfort (40) dans la première ouverture d'élément de renfort (42) et/ou l'alésage par un ajustement serré ; et éventuellement comprenant l'insertion du premier élément de renfort (40) dans les premier et second éléments raclettes (30, 32) par une distance qui est inférieure à la moitié de la longueur des premier et second éléments raclettes (30, 32).

13. Procédé selon l'une quelconque des revendications 10 à 12, comprenant la formation des premier et second éléments raclettes (30, 32) à partir d'un matériau plastique ou composite.

14. Procédé selon l'une quelconque des revendications 10 à 13, comprenant la formation d'au moins l'un des premier et second éléments raclettes (30, 32) pour comprendre une partie cache (34) qui s'étend à partir d'un plan majeur de l'élément raclette vers un emplacement de liaison et comprenant éventuellement la formation de la partie cache (34) pour comprendre un évidement destiné à recevoir et à retenir un axe de liaison (22) reliant deux maillons de chaîne adjacents.
